# FASCICULE DE BREVET EUROPEEN

(11) **EP 3 483 470 B1**
(45) Date de publication et mention de la délivrance du brevet: **17.06.2020**
(21) Numéro de dépôt: 18202919.9
(22) Date de dépôt: 26.10.2018
(51) Int. Cl.: F16F 15/129, F16F 15/139

(54) **DISPOSITIF DE FRICTION D'EMBRAYAGE**
REIBUNGSVORRICHTUNG EINER KUPPLUNG
CLUTCH FRICTION DEVICE

(30) Priorité: 10.11.2017 FR 1760567
(43) Date de publication de la demande: 15.05.2019
(73) Titulaire: Valeo Embrayages, Amiens 80009 (FR)
(72) Inventeur: VIOLA, Paolo, 80009 AMIENS (FR)
(74) Mandataire: Vincent, Catherine Marie Marguerite

(56) Documents cités:
- DE-A1-102016 203 450
- FR-A1- 2 687 749
- FR-A1- 2 735 826

## Description

La présente invention concerne un dispositif de friction d'embrayage, notamment de véhicule automobile.

Un tel dispositif de friction d'embrayage est destiné à constituer une partie d'une transmission, notamment pour un véhicule automobile ou pour un véhicule dit industriel, ce dernier étant par exemple un poids lourd, un véhicule de transport en commun, ou un véhicule agricole.

Dans un véhicule automobile, un embrayage est destiné à coupler des organes rotatifs menant et mené d'axes de rotation sensiblement alignés. L'organe rotatif menant est couplé au moteur, plus particulièrement à un vilebrequin du moteur, et l'organe mené est couplé à un arbre de boîte de vitesses.

L'embrayage comporte au moins un mécanisme d'embrayage entraîné en rotation par l'organe menant, ce mécanisme étant fixé sur un volant d'inertie solidaire du vilebrequin. Le mécanisme d'embrayage comprend un couvercle, un diaphragme et un plateau de pression tous liés en rotation avec l'organe menant.

L'embrayage comporte également un dispositif de friction d'embrayage, disposé entre le volant d'inertie et ledit mécanisme d'embrayage, comportant des garnitures de friction formant une pièce annulaire monobloc, ces garnitures étant fixées sur les deux côtés d'un voile de transmission de couple, solidaire en rotation avec l'organe mené.

Afin de coupler les organes rotatifs menant et mené, le diaphragme enserre le dispositif de friction entre le plateau de pression et un plateau de réaction solidaire en rotation du couvercle. En général, le plateau de réaction est formé par le volant d'inertie.

Le serrage du dispositif de friction entre le plateau de pression et le plateau de réaction est commandé par le conducteur du véhicule au moyen d'une pédale de commande déplaçable entre une position de débrayage, dans laquelle le dispositif de friction n'est pas enserré, et une position d'embrayage, dans laquelle le dispositif de friction est enserré.

En phase d'embrayage et à chaque rotation du moteur, le vilebrequin transmet à l'embrayage des vibrations axiales et/ou de flexion par l'intermédiaire du volant d'inertie. Le dispositif de friction d'embrayage reprend ces vibrations axiales par les garnitures d'embrayage qui sont serrée entre le mécanisme et le volant d'inertie. Les débattements mesurés sur la périphérie externe des garnitures peuvent alors atteindre des valeurs crêtes - crêtes de l'ordre de plusieurs millimètres.

Le document FR2982920 décrit un dispositif de friction d'embrayage pouvant être soumis à ce genre de vibration axiale et/ou de flexion en provenance du volant d'inertie. Il décrit notamment un dispositif de friction d'embrayage comprenant autour de son axe de rotation un voile annulaire de transmission de couple, deux rondelles de guidage coaxiales disposées de part et d'autre du voile annulaire et des organes élastiques disposés circonférentiellement entre le voile et les rondelles de guidage. Des moyens de frottement sont disposés entre le voile et les rondelles de guidage, au niveau du diamètre intérieur du voile. Les moyens de frottement comprennent une rondelle élastique et une rondelle de frottement disposées sur la périphérie interne du voile. Dans la position embrayée de l'embrayage, le voile annulaire lié directement aux garnitures de frottement subit le battement axial imposé par le volant d'inertie. Ce phénomène d'oscillation du voile autour de son axe a pour effet de faire pomper axialement les moyens de frottement tout au long de la durée de vie de l'embrayage. La fréquence de pompage axial élevée entraine une usure des moyens de frottement.

Afin de limiter ces phénomènes d'usure, Il est connu de remplacer la rondelle élastique par un élément presseur annulaire formé d'un matériau élastomère intercalé directement entre le voile et la rondelle de frottement.

Ce dispositif présente le désavantage de limiter la charge axiale exercée au sein des moyens de frottement, et par voie de conséquence de limiter le niveau de couple d'hystérésis au sein du dispositif de friction d'embrayage. Le document DE 10 2016 203 450 A1 divulgue toutes les caractéristiques du préambule de la revendication 1.

L'invention a notamment pour but de remédier à ces inconvénients en fournissant un dispositif de friction d'embrayage capable de supporter le phénomène d'oscillation du voile et de limiter l'usure des moyens de frottement. L'invention a également pour but d'apporter une solution simple, efficace et économique à ce problème.

A cet effet, l'invention a pour objet un dispositif de friction d'embrayage, en particulier de véhicule automobile, comprenant :
- un voile annulaire de transmission de couple, suivant un axe de rotation,
- deux rondelles de guidage coaxiales disposées de part et d'autre du voile annulaire,
- des organes élastiques disposés circonférentiellement entre le voile et les rondelles de guidage et
- des moyens de frottement comprenant au moins une rondelle élastique et une rondelle de frottement disposées entre le voile et l'une ou l'autre des rondelles de guidage,
ladite rondelle de frottement comprenant un élément déformable intercalé entre deux couches métalliques.

Ce dispositif de friction d'embrayage présente l'avantage, selon l'invention, de réduire l'usure au niveau de la rondelle élastique en autorisant une déformation élastique de la rondelle de frottement à chaque rotation du moteur. La présence de l'élément déformable intercalé entre les deux couches métalliques de la rondelle de frottement autorise un déplacement relatif d'une couche métallique par rapport à l'autre en fonction de l'oscillation angulaire du voile.

L'élément déformable est constitué d'une couche d'élastomère.

Avantageusement, au moins une des couches métalliques de la rondelle de frottement forme une face de frottement sur le voile ou sur l'une des rondelles de guidage.

Ce dispositif de friction d'embrayage présente également l'avantage, grâce à l'emploi d'élastomère d'atténuer les vibrations et de réduire les micro-mouvements au sein des moyens de frottement. L'usure au sein du dispositif de friction d'embrayage est ainsi réduite.

L'invention peut présenter l'une ou l'autre des caractéristiques décrites ci-dessous combinées entre elles ou prises indépendamment les unes des autres :
Avantageusement, la rondelle élastique et la rondelle de frottement sont disposées du même côté du voile.

De préférence, la rondelle de frottement est intercalée axialement entre la rondelle élastique et le voile de sorte que l'une des couches métalliques de la rondelle de frottement frotte sur le voile, et l'autre des couches métalliques est en appui sur la rondelle élastique.

Cet agencement autorise un écrasement de la rondelle de frottement sans modifier les appuis de la rondelle élastique, quelles que soient les oscillations du voile. L'invention permet en outre de réduire l'usure au niveau de la rondelle élastique en autorisant une déformation élastique de la rondelle de frottement à chaque rotation du moteur.

Selon un mode de réalisation de l'invention, la rondelle de frottement est disposée d'un côté du voile et la rondelle élastique est disposée de l'autre côté du voile.

De préférence, l'une des couches métalliques de la rondelle de frottement frotte sur le voile, et l'autre des couches métalliques frotte sur l'une des rondelles de guidage.

Cet agencement autorise des oscillations du voile par rapport aux rondelles de guidage sans risquer d'endommager ou d'user de manière abusive la rondelle de frottement.

Selon un autre mode de réalisation de l'invention, la rondelle de frottement est intercalée axialement entre la rondelle élastique et l'une des rondelles de guidage.

Avantageusement, l'une des couches métalliques de la rondelle de frottement frotte sur la rondelle de guidage, et l'autre des couches métalliques est en appui sur la rondelle élastique.

Cet agencement permet en outre de réduire l'usure au niveau de la rondelle élastique en autorisant une déformation élastique de la rondelle de frottement à chaque rotation du moteur.

De préférence, le dispositif de friction d'embrayage comprend un moyeu de sortie de couple, les rondelles de guidage sont liées en rotation au moyeu de sortie de couple.

Par exemple, les rondelles de guidage peuvent être liées en rotation au moyeu de sortie de couple par l'intermédiaire de rivets, ou d'une soudure.

Avantageusement, la rondelle de frottement est reliée au moyeu par l'intermédiaire d'une cannelure formée dans l'une des couches métalliques.

La couche métallique comprend une cannelure intérieure connectée à une cannelure extérieure du moyeu de sortie de couple. Cet agencement permet de bloquer en rotation la rondelle de frottement par rapport au moyeu de sortie de couple de manière simple et économique.

Avantageusement, les couches métalliques sont solidaires en rotation.

La rondelle de frottement comprend des moyens de solidarisation en rotation des couches métalliques. Les moyens de solidarisation présente l'avantage, selon l'invention, de limiter le cisaillement de la couche d'élastomère survenant lorsqu' une différence de coefficient de frottement apparait entre les deux surfaces d'appui de la rondelle de frottement.

Par exemple, les moyens de solidarisation en rotation sont formés par des pattes d'orientation axiale, issues de l'une des couches métalliques et pénétrantes dans des encoches réalisées sur l'autre couche métallique.

Par exemple, les moyens de solidarisation en rotation sont formés par des points de soudure.

De préférence, la rondelle de frottement est liée en rotation avec le voile annulaire.

Le voile de transmission de couple comprend des ouvertures débouchantes dans lesquelles s'étendent des pattes issues de l'une des couches métalliques de la rondelle de frottement.

Avantageusement, la rondelle de frottement est reliée au voile par l'intermédiaire de pattes s'étendant axialement au travers des ouvertures du voile annulaire.

Les pattes sont issues de la périphérie externe de l'une des couches métalliques.

Cet agencement permet de bloquer en rotation la rondelle de frottement par rapport au voile de manière simple et économique.

De préférence, la couche élastomère est rapportée sur les couches métalliques par collage, par vulcanisation ou surmoulage.

Selon un mode de réalisation de l'invention, l'élément déformable est formé par un empilage axial de couches d'élastomère.

Les couches d'élastomères successives sont liées entre elles par collage.

Selon un autre mode de réalisation de l'invention la couche d'élastomère est formée par une série d'anneaux concentriques répartis entre les couches métalliques.

Selon un autre mode de réalisation de l'invention la couche d'élastomère comprend une rondelle annulaire continue à partir de laquelle s'étendent dans la direction axiale des créneaux de matière formant par alternance une pluralité d'évidements.

Ce mode de réalisation permet d'adapter la raideur de l'élément déformable en fonction des valeurs d'oscillations du voile.

Selon encore un autre mode de réalisation, la couche élastomère de forme annulaire présente deux séries d'évidements répartis circonférentiellement sur les deux faces annulaires et décalées angulairement l'une par à l'autre.

Ce mode de réalisation permet d'adapter la raideur de l'élément déformable en fonction des valeurs d'oscillations du voile.

L'ensemble des modes de réalisation de l'invention permettent de réduire l'usure au niveau de la rondelle élastique en autorisant une déformation élastique de la rondelle de frottement à chaque rotation du moteur.

L'invention sera mieux comprise à la lecture de la description qui va suivre, donnée uniquement à titre d'exemple et faite en se référant aux dessins annexés dans lesquels :
- la figure 1 est une vue de face d'un dispositif de friction d'embrayage selon un premier mode de réalisation de l'invention,
- la figure 2 est une vue en coupe du dispositif de friction d'embrayage de la figure 1,
- la figure 3 est une vue éclatée, en perspective, du dispositif de friction d'embrayage de la figure 1,
- la figure 4a est une vue de détail des moyens de frottement selon le premier mode de réalisation de l'invention,
- les figures 4b, 4c et 4d sont des vues de détail des moyens de frottement selon d'autres modes de réalisation de l'invention,
- la figure 5 est une vue de détail de la rondelle de frottement selon un mode de mise en œuvre de l'invention,
- la figure 6 est une vue de détail de la rondelle de frottement selon un autre mode de mise en œuvre de l'invention,

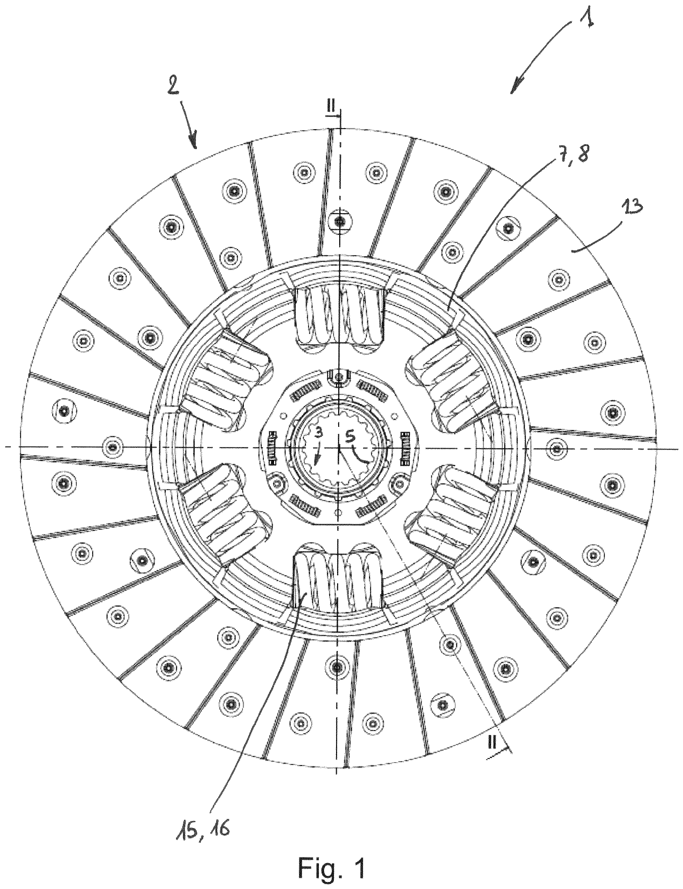

La figure 1 représente un dispositif de friction d'embrayage 1 selon un premier mode de réalisation de l'invention comportant un amortisseur de torsion 2 et un sous-ensemble préamortisseur 3. Le sous-ensemble préamortisseur 3 comprend une structure connue de l'Art Antérieur et ne sera pas décrite dans le détail. Le sous-ensemble préamortisseur 3 comprend cependant un corps de moyeu 5 à surface cannelée interne 6 disposé au centre du dispositif et destiné à être couplé à un arbre d'entrée d'une boîte de vitesses. Le corps de moyeu 5 est connecté à un moyeu de sortie de couple 4 par l'intermédiaire d'un engrènement par cannelure avec jeu circonférentiel, ce qui autorise le débattement angulaire du préamortisseur 3 par rapport à l'amortisseur de torsion 2.

Le moyeu de sortie de couple 4 de l'amortisseur de torsion 2 comporte une collerette radiale 41 définissant deux faces d'appui 42 radiales opposées. Des rondelles de guidage 7, 8 sont liées en rotation au moyeu de sortie de couple 4 par l'intermédiaire de rivets 19, chaque rondelle 7, 8 comportant une partie radiale 10 dont la périphérie interne vient en appui contre une face 42 de la collerette 41. Les rivets 19 sont répartis autour de l'axe X du dispositif de friction d'embrayage 1. Un voile annulaire 11 de transmission de couple est monté autour du moyeu de sortie de couple 4, entre les rondelles de guidage 7, 8 se faisant face l'une par rapport à l'autre, le voile annulaire 11 étant mobile en rotation par rapport aux rondelles de guidage 7, 8 et au moyeu de sortie de couple 4.

Un disque de friction 12 portant des garnitures de friction 13 est fixé au moyen de rivets 14 sur le voile annulaire 11.

Le dispositif de friction d'embrayage 1 dispose également d'un amortisseur de torsion 2 comportant ainsi deux parties mobiles l'une par rapport à l'autre, aptes à pivoter sur une plage angulaire déterminée autour de l'axe X, à savoir les rondelles de guidage 7, 8 et le moyeu de sortie de couple 4, d'une part, et le voile annulaire 11 et le disque de friction 12, d'autre part. Un tel amortisseur de torsion 2 est du type symétrique.

Des ressorts hélicoïdaux 15, 16 de compression sont montés dans des fenêtres 17, 18 du voile annulaire 11 et des rondelles de guidage 7, 8. En particulier, le dispositif de friction d'embrayage 1 comporte des ressorts internes 16, montés dans des ressorts externes 15 coaxiaux, chaque ensemble ressort interne 16 - ressort externe 15 étant monté dans des fenêtres 17, 18 du voile annulaire 11 et des rondelles de guidage 7, 8.

Les extrémités des ressorts 15, 16 sont destinées à venir s'appuyer sur les bords radiaux des extrémités des fenêtres du voile annulaire 11 et des rondelles de guidage 7, 8. Les ressorts hélicoïdaux sont répartis circonférentiellement autour de l'axe X du corps de moyeu 5.

Chaque rondelle de guidage 7, 8 est formée d'une tôle emboutie d'épaisseur globalement constante et comporte une partie radiale annulaire 10 située radialement à l'intérieur, prolongée radialement vers l'extérieur par une partie bombée annulaire.

La forme des rondelles de guidage 7, 8 et le positionnement des fenêtres 18 permettent, à la fois au ressort interne 16 et au ressort externe 15, de s'appuyer sur les rondelles de guidage 7, 8.

Des moyens de frottement 20, 30, 50 sont en outre disposés entre chacune des rondelles de guidage 7, 8 et le voile annulaire 11.

Les ressorts 15, 16 et les moyens de frottement 20, 30, 50 permettent, comme cela est connu en soi, d'absorber et d'amortir les vibrations et les acyclismes de rotation.

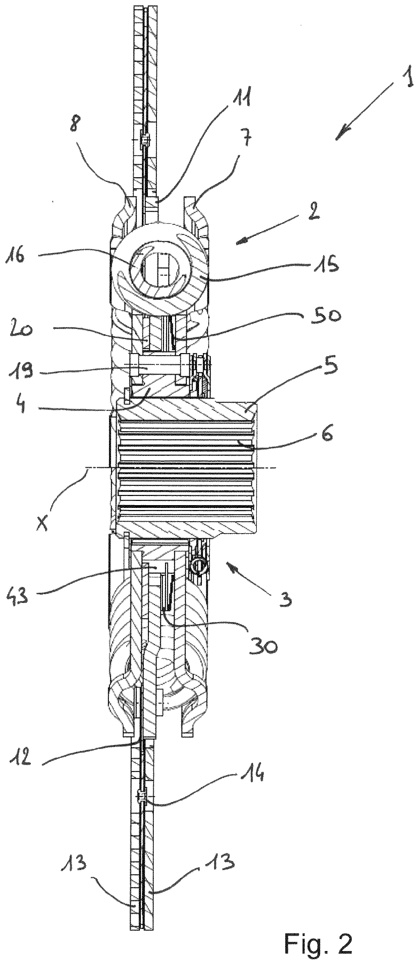

Comme cela est visible à la figure 2, les moyens de frottement sont composés, d'une part, d'une rondelle de calage 20 montés entre l'une 8 des rondelles de guidage et le voile annulaire 11, et d'autre part, d'une rondelle de frottement 30 et d'une rondelle élastique 50 montés entre l'autre 7 des rondelles de guidage et le voile annulaire 11.

La rondelle de calage 20 est une rondelle de forme annulaire équipée d'une cannelure intérieure 21. La cannelure intérieure 21 engrène avec une cannelure extérieure 43 formée sur la collerette 41 du moyeu de sortie de couple 4. La rondelle de calage 20 est fixe en rotation par rapport à la rondelle de guidage 8. La rondelle de calage 20 est par exemple formée d'une tôle d'acier. La rondelle de calage 20 comprend également sur une de ces faces latérales une face de frottement avec le voile annulaire 11.

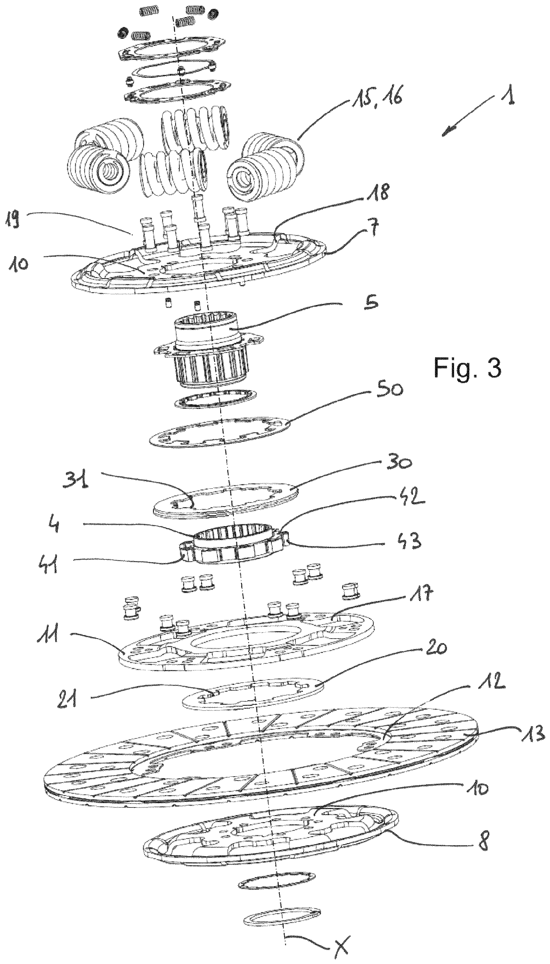

Dans le premier mode de réalisation décrit sur les figures 2 et 3, la rondelle élastique 50 et la rondelle de frottement 30 sont disposés du même côté du voile annulaire 11.

La rondelle de frottement 30 comprend un élément déformable 32 intercalé entre deux couches métalliques 34, 35. L'assemblage de l'élément déformable 32 et des deux couches métalliques 34, 35 est réalisé par exemple par collage, de sorte que la rondelle de frottement 30 forme un seul et même composant ayant des propriétés à la fois élastique et de frottement.

L'élément déformable 32 selon le premier mode de réalisation de l'invention est constitué d'une couche d'élastomère. Par exemple, la couche d'élastomère peut être formée en caoutchouc, ou en néoprène ou en une autre matière synthétique ayant des propriétés élastiques de compression.

La rondelle de frottement 30 est une rondelle de forme annulaire équipée d'une cannelure intérieure 31. La cannelure intérieure 31 engrène avec une cannelure extérieure 43 formée sur la collerette 41 du moyeu de sortie de couple 4. La rondelle de frottement 30 est fixe en rotation par rapport aux rondelles de guidage 7 et 8. Les couches métalliques de la rondelle de frottement 30 sont par exemple formées de tôles d'acier. La rondelle de frottement 30 comprend également sur une de ces faces latérales une face de frottement avec le voile annulaire 11.

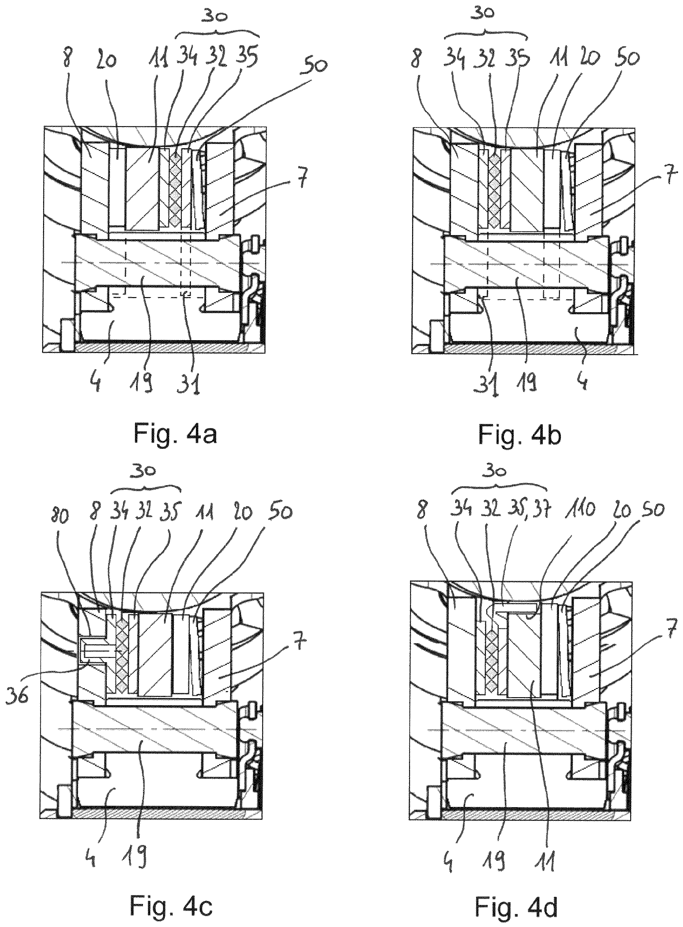

Selon le premier mode de réalisation de l'invention illustré sur la figure 4a, la rondelle de frottement 30 est intercalée axialement entre la rondelle élastique 50 et le voile annulaire 11, de sorte que l'une 34 des couches métalliques de la rondelle de frottement frotte sur le voile, et l'autre 35 des couches métalliques est en appui sur la rondelle élastique.

La rondelle de frottement 30 est pressée sur le voile annulaire 11 sous l'action de la charge axiale exercée par la rondelle élastique 50. La rondelle élastique 50 est une rondelle de type « Belleville ». L'appui sur la rondelle élastique 50 se fait dans ce mode de réalisation sur le diamètre extérieur de la rondelle de frottement 30. L'autre appui de la rondelle élastique 50 se fait sur la partie radiale 10 de la rondelle de guidage 7. Ainsi, lors de la rotation du voile annulaire 11 par rapport aux rondelles de guidage 7 et 8, un frottement est généré sous l'action du glissement des faces de frottement des rondelles de calage 20 et de frottement 30 sur le voile annulaire 11.

Le positionnement de la rondelle de frottement entre la rondelle élastique et le voile annulaire autorise écrasement de la rondelle de frottement sans modifier les appuis de la rondelle élastique, quelles que soient les oscillations du voile. A chaque oscillation générée par les vibrations axiales du volant d'inertie, le voile s'incline par rapport aux rondelles de guidage. Dans ce cas de figure, les faces d'appuis du voile ne sont plus parallèles aux moyens de frottement et notamment ne sont plus parallèles aux appuis de la rondelle élastique 50. Dans ce cas de figure, la couche d'élastomère de la rondelle de frottement 30 s'écrase ponctuellement. Les couches métalliques 34 et 35 ne sont plus parallèles et viennent compenser l'inclinaison du voile 11. Les appuis de la rondelle élastique restent alors inchangés. Les micro-mouvements entre la rondelle de frottement et la rondelle élastique sont réduits. On limite ainsi l'usure au niveau de la rondelle élastique en autorisant une déformation élastique de la rondelle de frottement à chaque rotation du moteur.

La figure 4b présente un second mode de réalisation de l'invention dans lequel la rondelle de frottement 30 est disposée d'un côté du voile annulaire 11 et la rondelle élastique 50 est disposée de l'autre côté du voile annulaire 11, de sorte que l'une 35 des couches métalliques de la rondelle de frottement 30 frotte sur le voile 11, et l'autre 34 des couches frotte sur la rondelle de guidage 8. La rondelle de frottement 30 est reliée au moyeu de sortie de couple 4 par l'intermédiaire d'une cannelure 31 formée dans l'une 34 des couches métalliques.

La rondelle de frottement 30 est fixe en rotation par rapport aux rondelles de guidage 7 et 8.

La figure 4c présente un troisième mode de réalisation de l'invention semblable au deuxième mode dans lequel la rondelle de frottement 30 est disposée d'un côté du voile annulaire 11 et la rondelle élastique est disposée de l'autre côté du voile annulaire 11, de sorte que l'une 35 des couches métalliques de la rondelle de frottement 30 frotte sur le voile 11, et l'autre 34 des couches frotte sur la rondelle de guidage 8. La rondelle de frottement 30 est reliée à la rondelle de guidage 8 par l'intermédiaire de pions 36 extrudés depuis l'une des couches métallique. Les pions 36 extrudés pénètrent dans des orifices ménagés dans la rondelle de guidage 8. La rondelle de frottement 30 est ainsi fixée en rotation par rapport à la rondelle de guidage 8.

La figure 4d présente un quatrième mode de réalisation de l'invention semblable au deuxième mode dans lequel la rondelle de frottement 30 est disposée d'un côté du voile annulaire 11 et la rondelle élastique 50 est disposée de l'autre côté du voile annulaire 11, de sorte que l'une 35 des couches métalliques de la rondelle de frottement 30 frotte sur le voile 11, et l'autre 34 des couches frotte sur la rondelle de guidage 8. La rondelle de frottement 30 est reliée au voile annulaire 11 par l'intermédiaire de pattes 37 pliées depuis l'une des couches métalliques. Les pattes 37 pliées pénètrent dans des orifices 110 ménagés dans le voile annulaire 11. La rondelle de frottement 30 est fixe en rotation par rapport au voile annulaire 11.

Les pattes 37 issues de l'une 35 des couches métalliques de la rondelle de frottement s'étendent axialement au travers du voile annulaire 11. Les pattes 37 sont issues de la périphérie externe de la couche métallique.

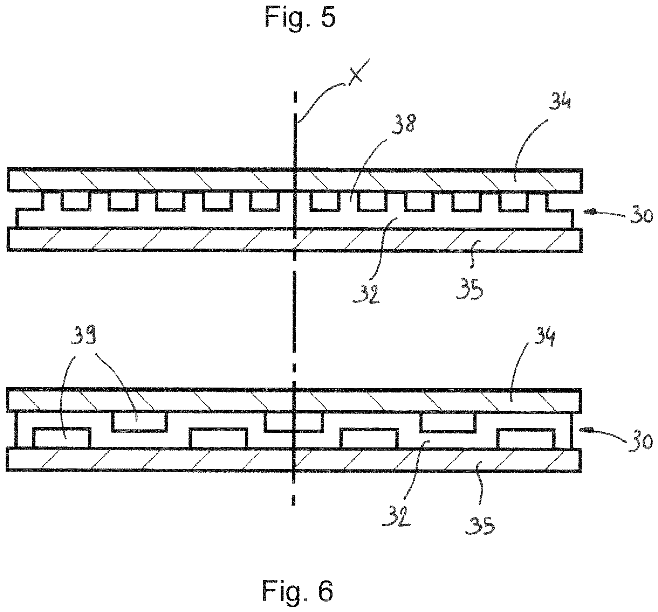

La figure 5 présente un mode de mise en oeuvre de la rondelle de frottement selon l'invention dans lequel la couche d'élastomère comprend une rondelle annulaire continue à partir de laquelle s'étendent dans la direction axiale des créneaux de matière 38 formant par alternance une pluralité d'évidements.

La figure 6 présente un mode de mise en œuvre de la rondelle de frottement selon l'invention dans lequel la couche élastomère de forme annulaire présente deux séries d'évidements 38 répartis circonférentiellement sur les deux faces annulaires et décalées angulairement l'une par à l'autre.

En variante des modes de mise en œuvre de la rondelle de frottement illustrée aux figures 5 et 6, la couche d'élastomère peut est formée par une série d'anneaux concentriques répartis entre les couches métalliques.

Selon encore un autre mode de mise en œuvre de la rondelle de frottement non représenté, l'élément déformable 32 peut être formé par un empilage axial de couches d'élastomère. Les couches d'élastomères successives sont dans ce cas liées entre elles par collage.

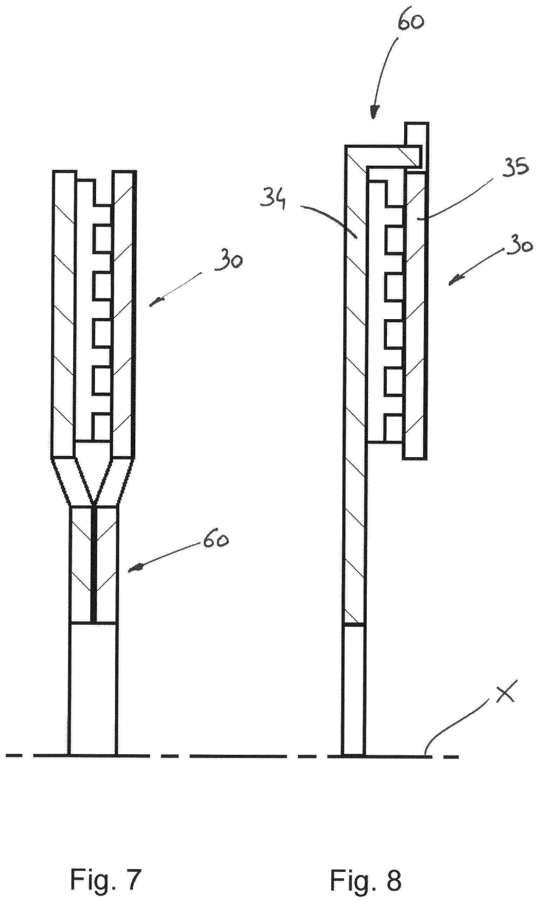

Les figures 7 et 8 présentent deux autres modes de réalisation de la rondelle de frottement dans lesquels les couches métalliques sont solidaires en rotation. Notamment, la rondelle de frottement 30 comprend des moyens de solidarisation en rotation 60 des couches métalliques qui limitent le risque de cisaillement de la couche d'élastomère en fonctionnement.

Dans l'exemple de la figure 7, les moyens de solidarisation en rotation 60 sont formés par des points de soudure disposés sur les périphéries interne des couches métalliques.

Dans l'exemple de la figure 8, les moyens de solidarisation en rotation 60 sont formés par des pattes d'orientation axiale, issues de l'une des couches métalliques 34 et pénétrantes dans des encoches réalisées sur l'autre couche métallique 35.

L'ensemble des modes de réalisation de la rondelle de frottement permettent d'adapter la raideur de l'élément déformable 32 en fonction des valeurs d'oscillations du voile annulaires 11.

## Revendications

1. Dispositif de friction d'embrayage, en particulier de véhicule automobile, comprenant :
- un voile annulaire (11) de transmission de couple, suivant un axe (X) de rotation,
- deux rondelles de guidage (7, 8) coaxiales disposées de part et d'autre du voile annulaire (11),
- des organes élastiques (15, 16) disposés circonférentiellement entre le voile et les rondelles de guidage et
- des moyens de frottement comprenant au moins une rondelle élastique (50) et une rondelle de frottement (30) disposées entre le voile et l'une ou l'autre des rondelles de guidage,
**caractérisé en ce que** ladite rondelle de frottement comprend un élément déformable (32) intercalé entre deux couches métalliques (34, 35), l'élément déformable étant constitué d'une couche d'élastomère (32).

2. Dispositif selon la revendication précédente, dans lequel la couche élastomère (32) est rapportée sur les couches métalliques (34, 35) par collage ou par vulcanisation ou par surmoulage.

3. Dispositif selon l'une quelconque des revendications précédentes, dans lequel la rondelle élastique (50) et la rondelle de frottement (30) sont disposées du même côté du voile, ladite rondelle de frottement étant intercalée axialement entre la rondelle élastique (50) et le voile annulaire (11).

4. Dispositif selon la revendication précédente, dans lequel une des couches métalliques (34, 35) de la rondelle de frottement (30) forme une face de frottement, l'autre couche métallique (34,35) étant en appui sur la rondelle élastique (50).

5. Dispositif selon l'une quelconque des revendications précédentes, dans lequel les rondelles de guidage (7, 8) sont liées en rotation à un moyeu de sortie de couple (4), et la rondelle de frottement est liée en rotation avec le moyeu (4) par l'intermédiaire d'une cannelure (31) formée dans l'une des couches métalliques (34, 35).

6. Dispositif selon l'une des revendications 1 ou 2, dans lequel la rondelle de frottement (30) est disposée d'un côté du voile annulaire (11) et la rondelle élastique (50) est disposée de l'autre côté du voile annulaire (11).

7. Dispositif selon la revendication précédente, dans lequel l'une des couches métalliques de la rondelle de frottement (30) frotte sur le voile annulaire (11) et l'autre des couches métalliques (34, 35) de la rondelle de frottement (30) frotte sur l'une des rondelles de guidage (7, 8).

8. Dispositif selon la revendication précédente, dans lequel la rondelle de frottement (30) est liée en rotation avec le voile annulaire (11), ledit voile annulaire (11) comprenant des ouvertures débouchantes dans lesquelles s'étendent des pattes (37) issues de l'une des couches métalliques de la rondelle de frottement.

9. Dispositif selon l'une quelconque des revendications précédentes, dans lequel la couche élastomère (32) de forme annulaire présente deux séries d'évidements (39) répartis circonférentiellement sur les deux faces annulaires et décalées angulairement l'une par à l'autre.

10. Dispositif selon l'une quelconque des revendications 1 à 8, dans lequel la couche d'élastomère (32) comprend une rondelle annulaire continue à partir de laquelle s'étendent dans la direction axiale des créneaux de matière (38) formant par alternance une pluralité d'évidements.

## Patentansprüche

1. Reibungsvorrichtung einer Kupplung, insbesondere eines Kraftfahrzeugs, die Folgendes beinhaltet:
- eine ringförmige Platte (11) zur Übertragung eines Drehmoments entlang einer Rotationsachse (X),
- zwei koaxiale Führungsscheiben (7, 8), die auf beiden Seiten der ringförmigen Platte (11) angeordnet sind,
- elastische Organe (15, 16), die zwischen der Platte und den Führungsscheiben über den Umfang angeordnet sind, und
- Reibmittel, die mindestens eine elastische Scheibe (50) und eine Reibscheibe (30) beinhalten, die zwischen der Platte und einer von den beiden Führungsscheiben angeordnet sind,
**dadurch gekennzeichnet, dass** die Reibscheibe ein verformbares Element (32) beinhaltet, das zwischen zwei Metallschichten (34, 35) eingeschoben ist, wobei das verformbare Element aus einer Elastomerschicht (32) besteht.

2. Vorrichtung nach dem vorhergehenden Anspruch, wobei die Elastomerschicht (32) durch Kleben oder durch Vulkanisieren oder durch Aufformen an den Metallschichten (34, 35) befestigt ist.

3. Vorrichtung nach einem der vorhergehenden Ansprüche, wobei die elastische Scheibe (50) und die Reibscheibe (30) auf derselben Seite der Platte angeordnet sind, wobei die Reibscheibe axial zwischen der elastischen Scheibe (50) und der ringförmigen Platte (11) eingeschoben ist.

4. Vorrichtung nach dem vorhergehenden Anspruch, wobei eine der Metallschichten (34, 35) der Reibscheibe (30) eine Reibfläche bildet, während die andere Metallschicht (34, 35) an der elastischen Scheibe (50) anliegt.

5. Vorrichtung nach einem der vorhergehenden Ansprüche, wobei die Führungsscheiben (7, 8) mit einer Drehmomentabtriebsnabe (4) drehfest verbunden sind und die Reibscheibe durch eine Nut (31), die in einer der Metallschichten (34, 35) gebildet ist, mit der Nabe (4) drehfest verbunden ist.

6. Vorrichtung nach einem der Ansprüche 1 oder 2, wobei die Reibscheibe (30) auf einer Seite der ringförmigen Platte (11) angeordnet ist und die elastische Scheibe (50) auf der anderen Seite der ringförmigen Platte (11) angeordnet ist.

7. Vorrichtung nach dem vorhergehenden Anspruch, wobei eine der Metallschichten der Reibscheibe (30) an der ringförmigen Platte (11) reibt und die andere der Metallschichten (34, 35) der Reibscheibe (30) an einer der Führungsscheiben (7, 8) reibt.

8. Vorrichtung nach dem vorhergehenden Anspruch, wobei die Reibscheibe (30) mit der ringförmigen Platte (11) drehfest verbunden ist, wobei die ringförmige Platte (11) Durchgangsöffnungen beinhaltet, in denen sich Laschen (37), die aus einer der Metallschichten der Reibscheibe hervorgehen, erstrecken.

9. Vorrichtung nach einem der vorhergehenden Ansprüche, wobei die Elastomerschicht (32) in Ringform zwei Reihen von Aussparungen (39) aufweist, die an den zwei ringförmigen Flächen über den Umfang verteilt und zueinander winkelversetzt sind.

10. Vorrichtung nach einem der Ansprüche 1 bis 8, wobei die Elastomerschicht (32) eine durchgehende ringförmige Scheibe beinhaltet, von der aus sich in der axialen Richtung Werkstoffabschnitte (38) erstrecken, die alternierend eine Vielzahl von Aussparungen bilden.

## Claims

1. Clutch friction device, in particular for a motor vehicle, comprising:
- an annular torque transmission web (11) about an axis of rotation (X),
- two coaxial guiding washers (7, 8) arranged on either side of the annular web (11),
- elastic members (15, 16) arranged circumferentially between the web and the guiding washers and
- friction means comprising at least one elastic washer (50) and one friction washer (30) arranged between the web and one or other of the guiding washers,
**characterized in that** said friction washer comprises a deformable element (32) interposed between two metallic layers (34, 35), the deformable element consisting of a layer of elastomer (32).

2. Device according to the preceding claim, wherein the elastomer layer (32) is applied to the metallic layers (34, 35) by adhesive bonding or by vulcanization or by overmoulding.

3. Device according to either one of the preceding claims, wherein the elastic washer (50) and the friction washer (30) are arranged on the same side of the web, said friction washer being interposed axially between the elastic washer (50) and the annular web (11).

4. Device according to the preceding claim, wherein one of the metal layers (34, 35) of the friction washer (30) forms a friction face, the other metal layer (34, 35) pressing against the elastic washer (50).

5. Device according to any one of the preceding claims, wherein the guiding washers (7, 8) are linked in rotation to a torque output hub (4), and the friction washer is linked in rotation with the hub (4) by means of a spline (31) formed in one of the metal layers (34, 35).

6. Device according to either of Claims 1 and 2, wherein the friction washer (30) is arranged on one side of the annular web (11) and the elastic washer (50) is arranged on the other side of the annular web (11).

7. Device according to the preceding claim, wherein one of the metal layers of the friction washer (30) rubs against the annular web (11) and the other of the metal layers (34, 35) of the friction washer (30) rubs against one of the guiding washers (7, 8).

8. Device according to the preceding claim, wherein the friction washer (30) is linked in rotation with the annular web (11), said annular web (11) comprising openings into which there extend tabs (37) projecting from one of the metal layers of the friction washer.

9. Device according to any one of the preceding claims, wherein the annular elastomer layer (32) has two sets of cutouts (39) distributed circumferentially over the two annular faces and angularly offset with respect to another.

10. Device according to any one of Claims 1 to 8, wherein the layer of elastomer (32) comprises a continuous annular washer from which there extend, in the axial direction, slots of material (38) forming, in alternation, a plurality of cutouts.
